# EUROPEAN PATENT SPECIFICATION

(11) **EP 1 804 593 B1**
(45) Date of publication and mention of the grant of the patent: **09.09.2009**
(21) Application number: 05759993.8
(22) Date of filing: 17.07.2005
(51) Int. Cl.: A23L 1/00, A47J 19/02

(54) **FOOD PROCESSING APPLIANCE PARTICULARLY USEFUL AS JUICE EXTRACTOR**
INSBESONDERE ALS ENTSAFTER NÜTZLICHE KÜCHENMASCHINE
APPAREIL DE TRAITEMENT D'ALIMENTS UTILE NOTAMMENT COMME EXTRACTEUR DE JUS

(30) Priority: 26.10.2004 US 972424
(43) Date of publication of application: 11.07.2007
(73) Proprietor: AAC Trade Ltd., New York, NY 10001 (US)
(72) Inventor: COHEN, Eli, 42810 Lev HaSharon (IL); GRANT, Ann, New York, NY 10024 (US)
(74) Representative: Modiano, Micaela Nadia
(86) International application number: PCT/IL2005/000760
(87) International publication number: WO 2006/046226

(56) References cited:
- US-B1- 6 202 547
- US-B1- 6 397 736
- US-B1- 6 412 404
- US-B1- 6 742 447

## Description

### FIELD AND BACKGROUND OF THE INVENTION

The present invention relates to a food processing appliance, and particularly to a juice extractor appliance for extracting juice from various types of food articles. The invention is especially useful with respect to the types of appliances described in U.S. Patents 5,924,357, 6,202,547, 6,412,404, 6,397,736, 6,742,447, and 6,862,982, and is therefore described below with respect to such types of appliances.

The above-cited patents describe a food processor appliance for processing food articles, comprising: a housing having an inlet feed tube for feeding food articles into the appliance; a pusher rod for manually pushing the food articles through the inlet feed tube; and a rotary cutter disc rotatable about a central disc axis and including a plurality of cutting edges for cutting a food article into pieces when the food article is pushed against the cutter disc by the pusher rod. Such appliances, when used for extracting juice from the food articles, further include an outlet for outletting juice extracted from the food articles, and a separator within the housing for separating the juice from the pulp and for directing the juice via an outlet tube to the outlet. The pulp is moved by centrifugal forces out of the housing into a receptacle supported laterally of the housing and may be used in other food preparations.

Such appliances, however, suffer from one or more of the following drawbacks. One drawback is that when such appliances are used for extracting juice from various types of food articles such as fruit, vegetables, and the like, the rotation of the cutter disc generally cuts the food article into a pulp saturated with juice until a thin sliver of the food article remains, which firmly adheres to the cutting edges of the cutter disc and rotates with the cutter disc. When this occurs, it is usually necessary, after each use of the appliance, to remove the cutter disc and to clean away the thin sliver of food article remaining on the cutter disc.

Another drawback in appliances of the latter type is that if the receptacle is removed, there is a danger that a person may insert the person's fingers into the housing and into engagement with the rotary cutter disc. A further drawback in such appliances is thai small seeds, such as grape seeds, may be passed with the pulp into the receptacle, thereby degrading the pulp for use in other food preparations.

### OBJECTS AND BRIEF SUMMARY OF THE INVENTION

An object of the present invention is to provide an appliance of the type described above having advantages in one or more the above respects.

The present invention discloses a food processing appliance for processing food articles according to independent claim 1.

An appliance constructed in accordance with the claimed feature thus effectively cuts up the food article more completely, without leaving the thin sliver adherent to the cutter disc. This not only increases the juice yield, but also, probably more important, reduces or eliminates the need for cleaning the cutter disc after each use of the appliance.

Several embodiments of the invention are described below for purposes of example. In one embodiment, the projecting pinching surface is in the form of a dimple formed in the side of the cutter disc opposite to that facing the inlet feed tube at the eccentric location such as to produce the projecting pinching surface on the side of the cutter disc facing the inlet feed tube. In other described embodiments, the projecting pinching surface is in the form of one or more rounded projections formed in the side of the cutter disc facing the inlet feed tube at the eccentric location.

The invention is particularly useful in appliances which further comprise a separator within the housing for separating the juice from the pulp and for directing the juice via an outlet tube to the outlet; and a spout movably mounted with respect to the outlet tube to a non-blocking position permitting the flow of juice to the spout, or to a blocking position blocking the flow of juice to the spout.

The spout can be pivotably mounted about a horizontal axis, and includes a blocking element at one end engageable with the outlet tube in the blocking position of the spout, and disengageable from the outlet tube in the non-blocking position of the spout. In one described preferred embodiment, the blocking element is an elastomeric cap receivable over the end of the outlet tube, and in another described embodiment it is an elastomeric plug receivable within the end of the outlet tube

There can be provided an appliance of the foregoing type wherein the appliance further comprises a lateral extension extending laterally of the housing for receiving a receptacle to collect the pulp after the juice has been separated therefrom; the lateral extension including a sensor for sensing a receptacle thereon and effective to enable rotation of the rotary cutter disc only when a receptacle is sensed on the lateral extension. This feature provides a certain measure of protection against possible injury to a person's fingers when the receptacle is removed, since the removal of the receptacle prevents operation of the rotary cutter disc.

The latter protective feature against accidental entry of a person's fingers can be effected by providing the appliance with a cover formed on its under surface with a plurality of circumferentially-spaced baffles defining passageways permitting the passage of pulp from the housing into the receptacle, but blocking the entry of a person's fingers or other foreign objects into the housing when the receptacle is removed.

The separator further includes, on its outer rim engageable by the cover, a plurality of radially-extending circumferentially-spaced ribs defining, with the cover, passageways permitting the passage of pulp from the housing into the receptacle, but blocking the passage of seeds, pits, and the like in the food articles into said receptacle. The pulp received within the receptacle is thus free of seeds and may therefore be used in other food preparations.

The rotary cutter disc can include a first group of cutting edges housing having an inlet feed tube for feeding food articles into the appliance; a pusher rod for manually pushing the food articles through the inlet feed tube; and a rotary cutter disc rotatable about a central disc axis and including a plurality of cutting edges for cutting the food articles into pieces when the food article is pushed against the cutter disc by the pusher rod; the cutter disc including: a first group of cutting edges located in a central circular region of the rotary cutter disc; a second group of cutting edges located in an outer peripheral region of the rotary cutter disc around the central circular region; and a third group of cutting edges of linear form extending radially of the cutter disc and spaced circumferentially around and outwardly of the second group of cutting edges. This feature, particularly when taken together with the other features, has been found to more effectively and thoroughly cut-up such food articles as grapes, and for separating the juice from the pulp thereof.

The rotary cutter disc may further include an annular array of grinding projections, and a cover, attachable over the upper end of the housing, may be provided on its undersurface with annular array of grinding projections cooperable with the grinding projections of the rotary cutter disc, to enable the appliance also to be used for grinding coffee beans, soy beans, and the like.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a front perspective view illustrating one form of juice extractor appliance constructed in accordance with the present invention;
Fig. 2 is a rear perspective view of the appliance of Fig. 1;
Figs. 3 and 4 are side elevational views from the opposite sides of the appliance of Fig. 1;
Fig. 5 is a rear elevational view of the appliance of Fig. 1;
Fig. 6 is a front elevational view of the appliance of Fig. 1 showing, in broken lines, the rotary cutter disc for cutting the food articles into a pulp saturated with juice, and the separator basket for separating the juice from the pulp;
Figs. 7 and 8 diagrammatically illustrate the location of the rotary cutter disc with respect to the inlet feed tube;
Figs. 9 and 10 are plan and side views, respectively, of the rotary cutter disc in the appliance of Figs. 1 - 8;
Figs. 11 and 12 are perspective and side views, respectively, illustrating another construction of rotary cutter disc which may be used;
Fig. 13 is an exploded perspective view illustrating the construction of the juice outlet;
Fig. 14 is a perspective view illustrating the normally-closed position of the juice outlet blocking the flow of juice therefrom;
Fig. 15 is a corresponding view but showing, in broken lines, the open position of the juice outlet permitting the flow of juice therefrom;
Fig. 16 is a view similar to that of Fig. 15, but illustrating a modification in the outlet spout;
Fig. 17 illustrates the underside of the upper cover in the appliance of Figs. 1-15;
Fig. 18 is a view similar to that of Fig. 16, but illustrating a modification in the construction of the upper cover to prevent insertion of a person's fingers into the housing when the pulp-receiving receptacle is removed, such as to expose the person's fingers to the rotary cutter blade;
Fig. 19 is a perspective view illustrating another food processing appliance constructed in accordance with the present invention for use both as a juice extractor and also as a grinder for grinding coffee beans, soy beans, and the like;
Fig. 20 is a top view of the appliance of Fig. 18 with the upper cover removed;
Fig. 21 is a bottom view of the upper cover in the appliance of Fig. 18;
Fig. 22 illustrates a hand-held funnel which may be used with the appliance of Fig. 18 when the appliance is used for grinding coffee-bean or soy-beans;
Fig. 23 illustrates one construction of rotary cutter disc in the appliance of Figs. 19-21;
and Fig. 24 illustrates another construction of the rotary cutter disc for use in the appliance of Figs. 19-21.

It is to be understood that the foregoing drawings, and the description below, are provided primarily for purposes of facilitating understanding the conceptual aspects of the invention and various possible embodiments thereof, including what is presently considered to be a preferred embodiment. In the interest of clarity and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications than described herein.

### DESCRIPTION OF PREFERRED EMBODIMENTS

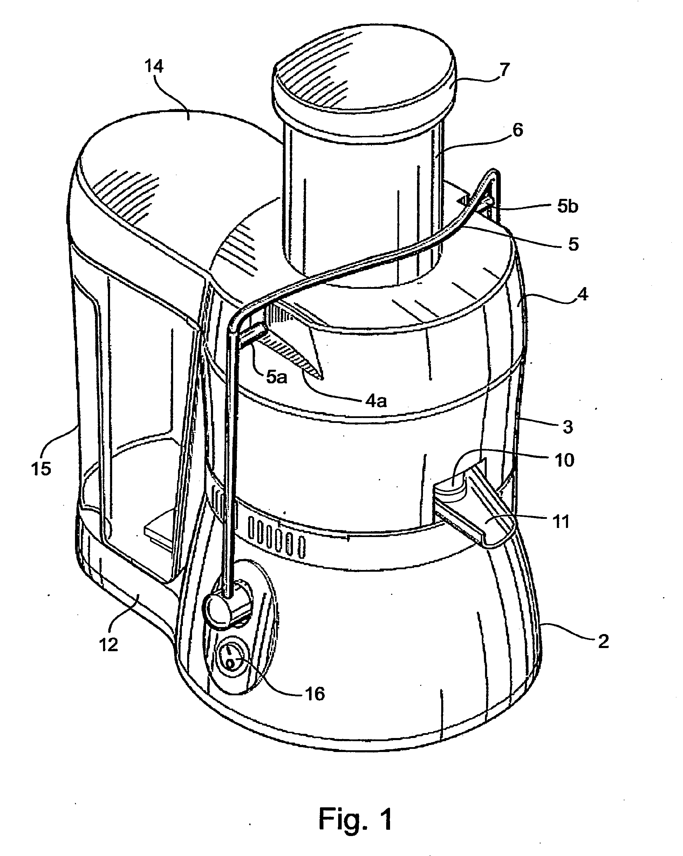

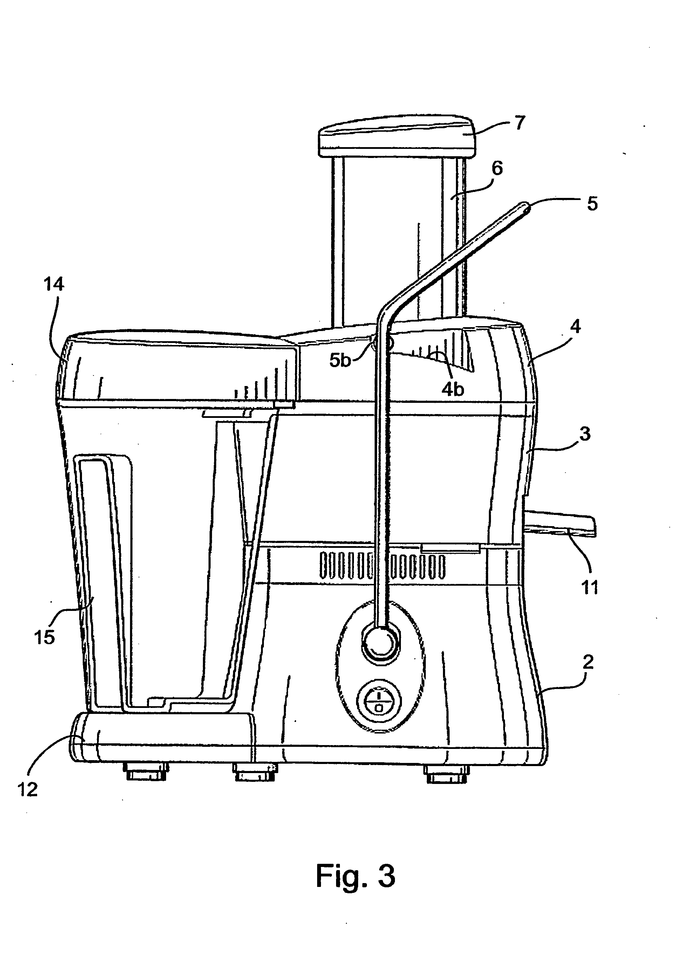

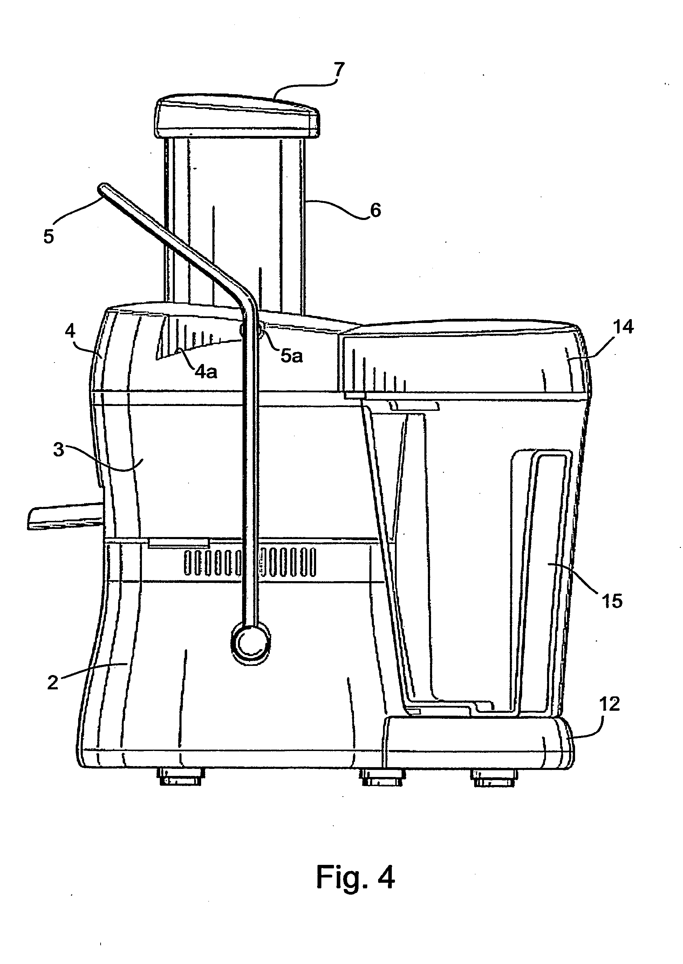

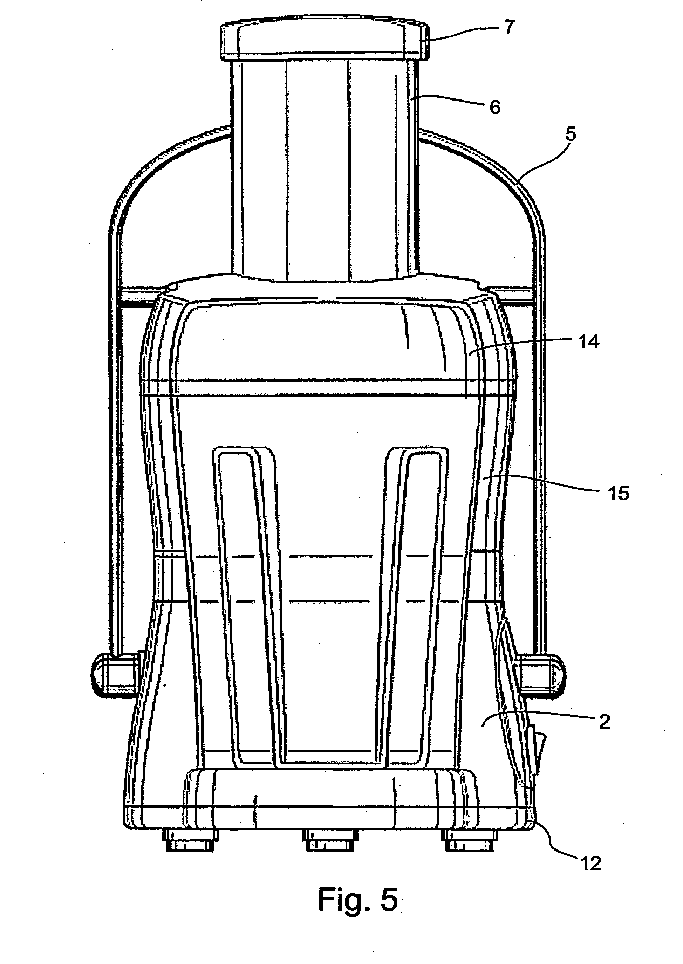

### The Embodiment of Figs. 1-18

The appliance illustrated in Figs. 1-18 is primarily useful as a juice extractor. It includes a housing constituted of a lower base 2 and an upper base 3 closed by an upper cover 4. A locking bar 5 is pivotally mounted to the lower base 2 and includes roller elements 5a, 5b seatable within recesses 4a, 4b in cover 4 for selectively locking the cover in place, or unlocking it to enable access into the interior of the housing.

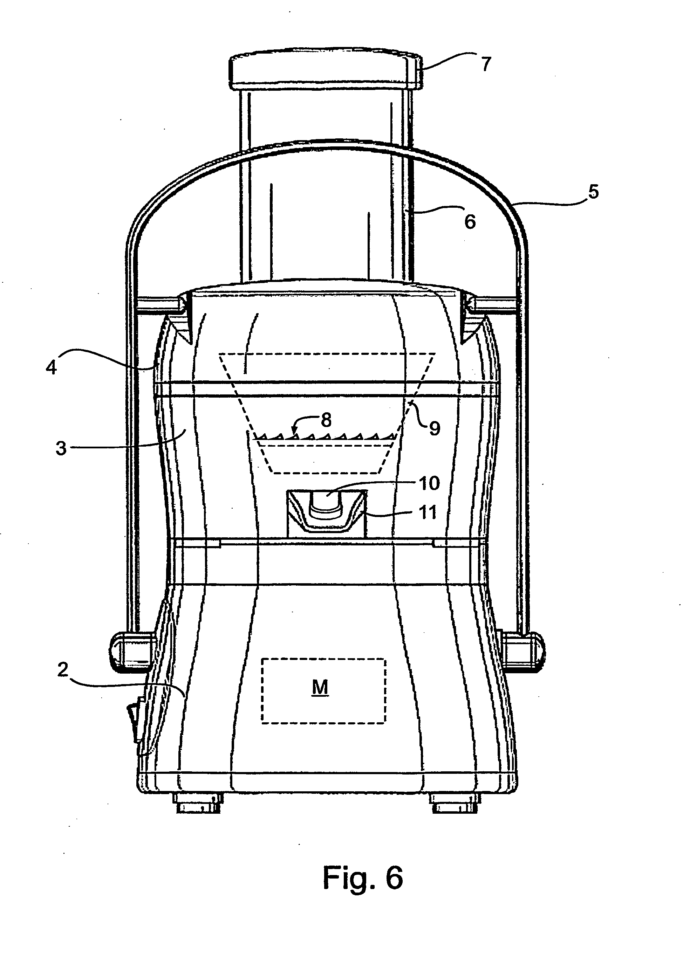

The upper cover 4 is integrally formed with an inlet feed tube 6 for introducing food articles into the housing by means of a manual pusher member or rod 7. As shown in Fig. 6, a rotary cutter disc 8 is rotatably mounted within the housing and is driven by an electrical motor M within the lower base 2 for cutting the food articles received through the feed tube 6 into a pulp saturated with the juice to be extracted. As further shown in Fig. 6, the housing further includes a separator basket 9 which separates the juice from the pulp and directs the juice to an outlet tube 10 overlying a spout 11, for outletting the extracted juice into a receptacle (not shown) to be placed under the spout. Base 2 and cover 4 further include lateral extensions, 12 and 14, respectively, for removably supporting another receptacle 15 to receive the pulp in the separator basket 8 after extraction of the juice therefrom. The appliance is controlled by a manual switch 16 in the lower base 2.

Insofar as described above, such appliances are well known and further details are available from commercially-available articles and/or from the above-identified U.S. patents.

As indicated above, one of the drawbacks in the known juice extractor appliances of this type is the need for frequent cleaning of the rotary cutter disc 8 because of the presence of a thin sliver of the food article remaining adherent to the cutter disc after each use of the appliance. Thus, as the food article introduced via the inlet feed tube 6 is pressed by pusher rod 7 into engagement with the cutter disc 8, the food article is restrained against rotation with the cutter disc by the pusher rod so that the cutter disc effectively cuts the food article into a pulp saturated with the juice. However, when but a thin sliver of the food article remains, the pressure applied by the pusher rod pressing the food article against the cutter disc is insufficient to prevent rotation of the remnant thin sliver with the cutter disc, so that the thin sliver remains attached to and rotates with the cutter disc. This not reduces the amount of juice capable of being extracted from the food article, but more importantly, increases the need for frequent cleaning of the cutter disc after each use of the appliance.

The present invention, according to one aspect, provides an improved cutter disc construction which reduces of eliminates this problem. The invention also provides several other important improvements to appliances of this type.

The improvement regarding the construction of the cutter disc for eliminating the thin sliver of the food article remaining on the cutter disc will first be described particularly with reference to Figs. 6 - 12.

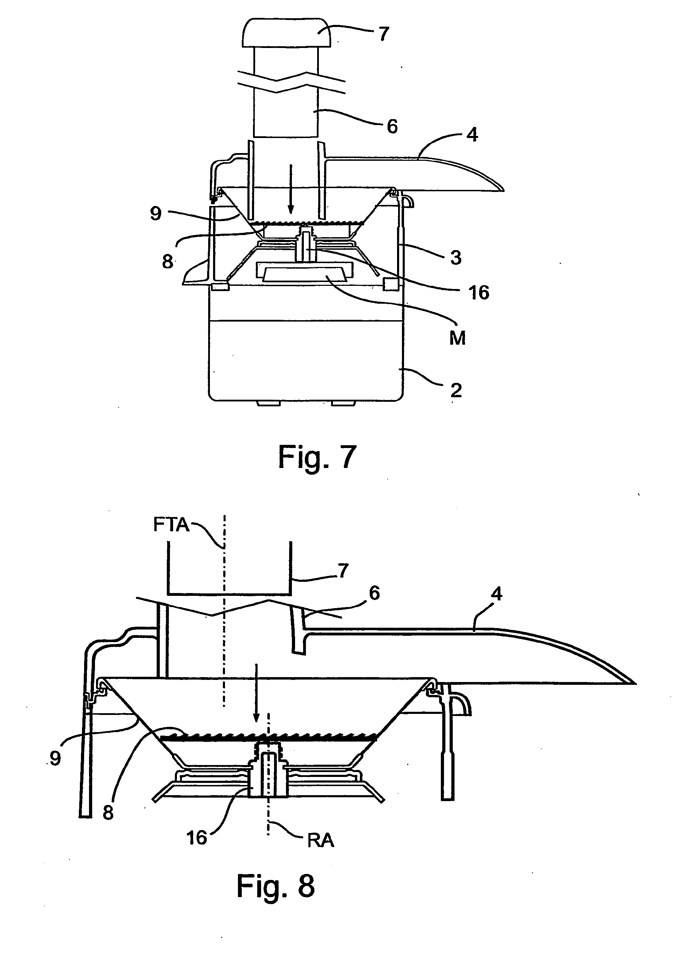

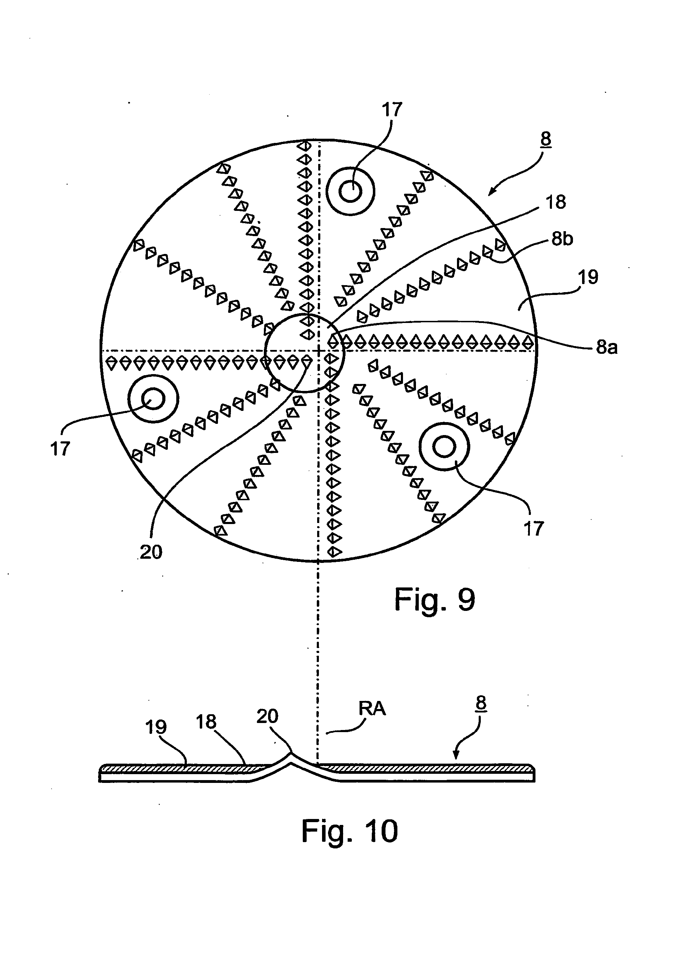

As shown particularly in Figs. 7 and 8, the cutter disc 8 is preferably eccentrically mounted with respect to the feed tube 6. That is, the cutter disc 8 is driven by motor M via a drive shaft 16 about a rotary axis RA which is laterally displaced from the axis FTA of the feed tube 6. Such eccentric mounting of the cutter disc is frequently used in juice extractor appliances of this type to avoid the problem of the "dead region" of the food article centrally of the cutter disc. Such "dead region" of the food article may not be cut up by the cutter disc if the rotary axis of the cutter disc is coaxial with the axis of the feed tube. However, an eccentric mounting of the cutter disc with respect to the feed tube is not essential in the present case, when using the cutter discs illustrated in Figs. 9 - 12, since such cutter discs are provided with cutting edges in the center area to avoid this "dead region" problem.

Thus, Fig. 9 illustrates cutter disc 8 as including a plurality of cutting edges projecting from the side of the cutter disc facing the inlet feed tube 6 for cutting the food articles into a pulp saturated with juice when the food article is pushed against the cutter disc by the pusher rod 7. The cutter disc is mounted to shaft 16 via a plurality of fasteners received within openings 17 formed in the cutter disc.

Figs. 9 and 10 illustrate the rotary axis RA as passing through the center of the cutter disc. As shown particularly in Fig. 9, the cutting edges formed in the face of the cutter disc 8 include a first group 8a located in a central circular region 18, and a second group 8b located in an outer peripheral region 19 around the central circular region 18. As will also be seen from Fig. 9, the central circular region 18 of the cutter disc is eccentric with respect to the rotary axis RA of the cutter disc.

As further seen in Fig. 9, the second group of cutting edges 8b formed in the outer peripheral region 19 are located in a plurality of lines radiating from the center circular region 18. The first group of cutting edges 8b formed in the center circular region 18 are in the form of extensions of two pairs of such lines which intersect within the central circular region 18. It will be seen from Fig. 9 that the cutting edges 8a in the central circular region 18 are of substantially the same size and shape as the cutting edges 8b in the outer peripheral region 19.

In accordance with one aspect of the present invention, the side of cutter disc 8 facing the inlet feed tube 6 is formed with a projecting pinching surface, best seen at 20 in Fig. 10 (and also in Fig. 9) projecting outwardly of the cutter disc and located eccentrically with respect to the center disc axis, i.e., the rotary axis RA, of the cutter disc. Thus, when a food article is pressed by the pusher rod 7 into firm engagement with the cutter disc, its cutting edges will cut the food article into a pulp saturated with the juice; and when the food article is reduced to a thin sliver which would normally adhere to the cutting disc by the cutting edges, the projecting pinching surface 20 of the cutter disc will "pinch" the thin sliver between it and the pusher rod, i.e., will press the sliver against the pusher rod, sufficient to effect a slight rotation of the thin sliver with respect to the cutter disc effective to detach the thin sliver from the cutter disc so as not to rotate with it. Thus, the rotation of the cutter disc will also cut up this thin sliver to thereby complete the cutting up of the food article without leaving a sliver remnant on the cutter disc.

In cutter disc 8 illustrated in Figs. 9 and 10, the projecting pinching surface 20 is in the form of a dimple formed in the side of the cutter disc opposite to that facing the inlet feed tube 6 at an eccentric location with respect to the rotary axis RA of the cutter disc. As shown in Fig. 10, the so-formed dimple produces the pinching surface 20 which projects outwardly of the cutting edges of the cutting cutter disc, to thereby effect the above-described "pinching" of the food article when but a thin sliver remains.

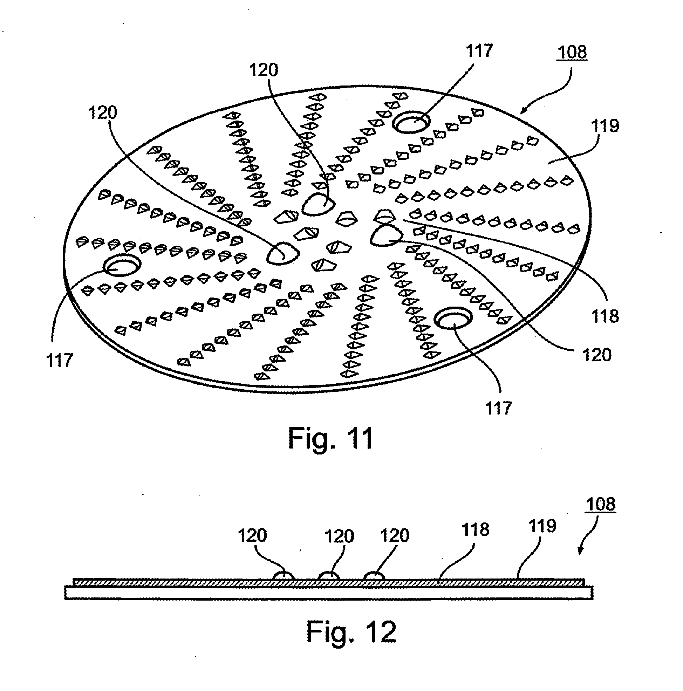

Figs. 11 and 12 illustrate a variation in the construction of the cutter disc, therein designated 108. Cutter disc 108 is also formed with openings 117 for mounting it to the motor drive shaft (motor 16, Figs. 7, 8), and with cutting edges formed as a first group located in a central circular region 118, and a second group located in the outer peripheral region 119 of the cutter disc around the central circular region.

The cutter disc illustrated in Figs. 11 and 12 is also formed, on the side thereof facing the inlet feed tube 6, with a projecting pinching surface, therein designated 120, projecting outwardly of the cutting edges and located eccentrically with respect to the central disc axis, i.e., rotary axis RA, of the cutting disc. In this case, however, the pinching surface.120 is in the form of a rounded or semi-spherical projection formed in the side of the cutter disc 108 facing the inlet feed tube. Pinching surface 120 in the cutter disc of Figs. 11 and 12 will thus act, in the same manner as described above with respect to pinching surface 20 in the cutter disc of Figs. 9. and 10, to pinch free the thin sliver of food normally formed and adherent to the cutter disc. If desired, this "pinching effect" may be increased by flattening the outer surfaces of the rounded projections 120.

In the cutter disc illustrated in Figs. 11 and 12, the cutting edges formed in the outer peripheral region 119 are also located in a plurality of lines radiating from the central circular region 118. However, the cutting edges in the central circular region 118 are of larger size than those in the outer peripheral region 119. In addition, the cutting edges within the central circular region 118 are constituted of but six cutting edges divided into three pairs, each pair being located in a line radiating from the center of the central circular region 118.

In addition, although the cutter disc 8 illustrated in Figs. 9 and 10 includes but a single projecting pinching surface 20, cutter disc 108 in Figs. 11 and 12 includes three such projecting pinching surfaces 120 located symmetrically around the central circular region 118. It will be appreciated that the cutter disc of Fits. 9 and 10 could also be provided with a plurality of such projecting pinching surfaces, e.g., as in Figs. 11 and 12, and that the cutter disc of Figs. 11 and 12 could be provided with a single pinching surface as in Figs. 9 and 10.

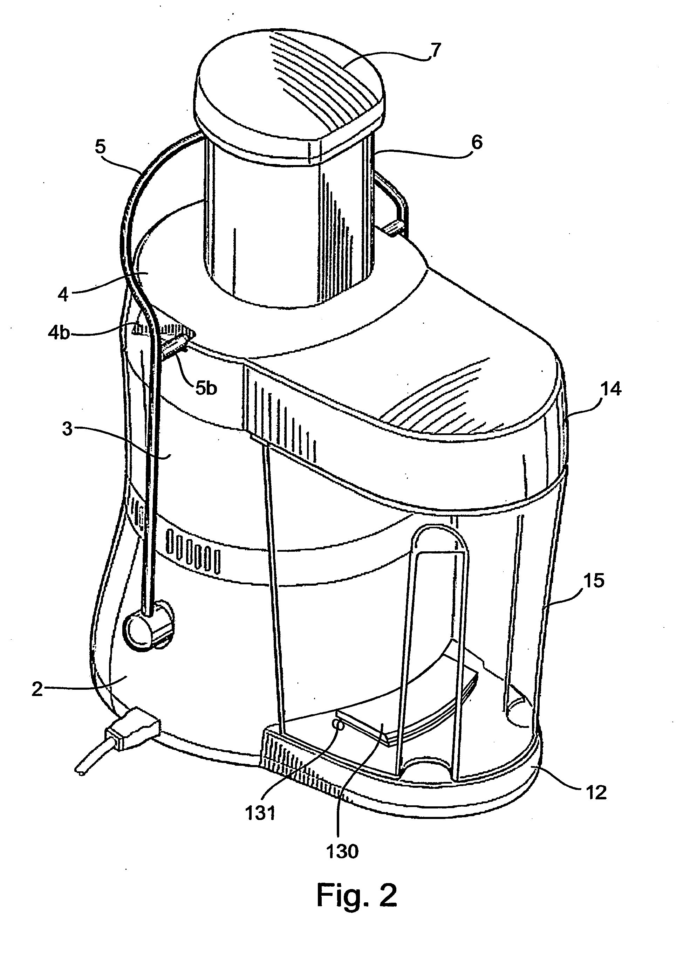

Fig. 2 illustrates another improvement in the illustrated juice extractor appliance. Thus, as shown in Fig. 2, the lateral extension 12 of the appliance base 2, for receiving the container 15 for the pulp separated by screen 9, includes a platform 130 on which the receptacle 15 is placed, and a sensor, in the form of a microswitch 131, which is actuated when the receptacle is placed on the platform. Microswitch 131 senses the presence of a receptacle 15 on platform 130 and is effective to enable the operation of the electrical motor M for operating the appliance. Thus, if no receptacle is sensed in its proper position on platform 130, the appliance will be disabled from operation. This feature provides protection against accidental injury when receptacle 15 is not in place by a person inserting fingers under the lateral extension 14 of the upper cover 4.

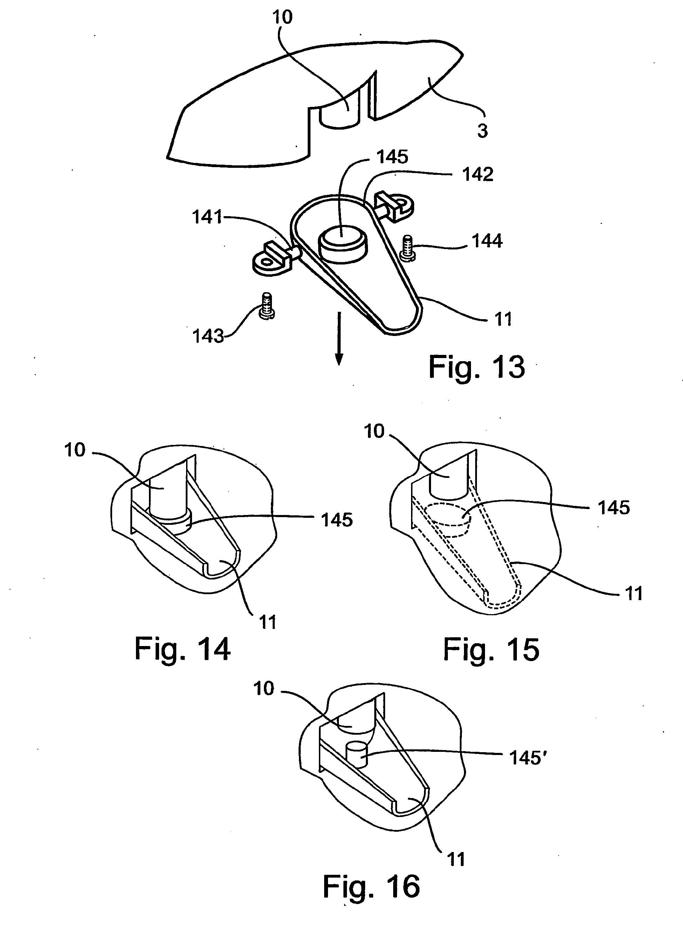

A further improvement in the illustrated appliance is seen in Figs. 13-16 which illustrate the juice outlet of the appliance for outletting juice extracted from the food articles. Thus, as shown in Fig. 13, the outlet includes the spout 11 underlying the juice outlet tube 10, briefly described above. In this case, however, the spout 11 is pivotally mounted to housing section 3 about a horizontal axis by a pair of pins 141, 142, each of which is fixed by a fastener 143, 144 to housing section 3 under the juice outlet tube 10. The inner end of spout 11 carries a blocking element in the form of an elastomeric cap 145, in alignment with the juice outlet tube 10.

Spout 11 is pivotal either to a blocking position (shown in full lines in Fig. 14) to cause cap 145 to engage the end of the juice outlet tube 10 to block the flow of juice therefrom, or to an unblocking position (shown in broken lines in Fig. 15) to unblock the flow of juice from outlet tube 10. Thus, when the appliance is not being operated, spout 11 would be in its upper blocking position illustrated in Fig. 14, and when the appliance is to be used for extracting juice from food articles, the spout would be pivoted to its lower unblocking position illustrated in Fig. 15.

It will also be seen from Fig. 13, that spout 11 may easily be removed from the appliance for cleaning, repair or replacement purposes.

Fig. 16 illustrates a variation in the construction of spout 11, wherein the blocking element, therein designated 145' , is in the form of an elastomeric plug receivable within the outlet tube 10, rather than in the form of a cap receivable over the end of the outlet tube.

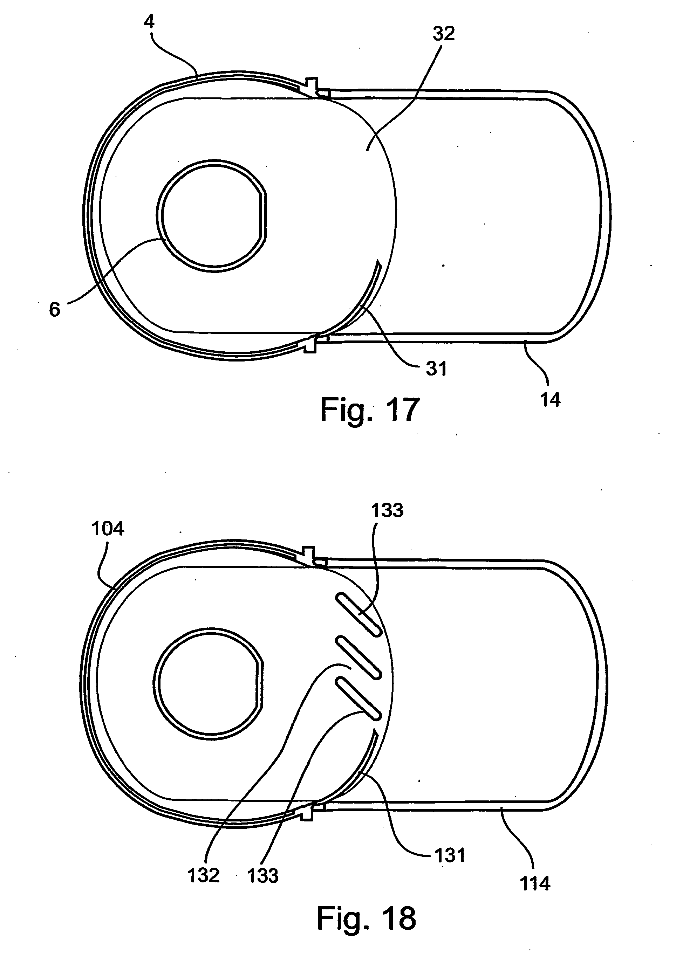

As indicated earlier, another drawback in juice extractor appliances of this type is the danger of a person inserting fingers into the appliance housing in the region of the rotary cutter disc 8 should the pulp-receiving receptacle 15 be removed. Thus, as shown in Fig. 16, the upper cover 4 is formed on its under surface with an arcuate baffle 31 between the upper cover and the lateral extension 14. Baffle 31 extends from one side of cover 4 but terminates short of the opposite side so as to define an open passageway 32 between the cover and the lateral extension 14 for the movement of the pulp from within the housing into the pulp-receiving receptacle 15 by centrifugal force. Thus, in the known construction, if receptacle 15 is removed, it is possible for someone to insert his or her fingers through passageway 32 into the interior of the housing and in the region of the rotary cutter disc 8, during the operation of the appliance. As described above, providing the lateral extension 12 of the housing with a sensor 130 (Fig. 2), to disable the operation of the appliance in the event the pulp-receiving receptacle 15 is removed, reduces this danger when the cover 4 is of the construction illustrated in Fig. 17.

Fig. 18 illustrates a modification in the upper cover, therein designated 104, which may be provided to prevent this possibility of personal injury. Thus, as shown in Fig. 18, in addition to baffle 131 between cover 104 and the lateral extension 114, the under surface of the upper cover 104 is formed with a plurality of inclined, circumferentially-spaced baffles 133 defining narrow passageways 132 for the passage of the pulp into the pulp-receiving receptacle 15, but blocking the introduction of a person's fingers into the housing in the event the receptacle is removed.

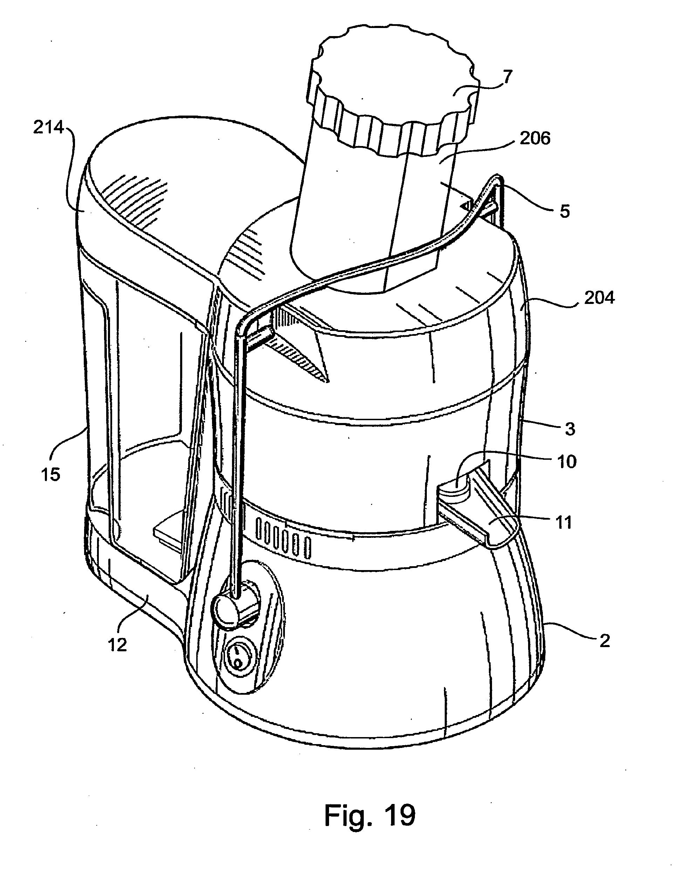

### The Embodiment of Figs. 19-24

Figs. 18-29 illustrate an appliance, similar to that of Figs. 1-18, but adapted for use not only for exacting juice from fruits and vegetables, but also for grinding beans, such as coffee beans, soy beans, and the like. In order to facilitate understanding, those elements which are basically the same as in the appliance of Figs. 1-18, are identified by the same reference numerals, whereas those elements which have been substantially modified or added for adapting the appliance for grinding functions are identified by reference numerals beginning with "200".

One slight change in the appliance of Figs. 19-21 is that the feed tube, therein designated 206, is slightly inclined, rather than being substantially vertical, as shown in appliance of Figs. 1-18. Such an inclined feed tube facilitates the introduction of beans and the like to be ground, as will be described more particularly below. Also, the axis (inclined) of the feed tube passes centrally of the rotary cutter disc 208, rather than eccentrically as in Figs. 1-18.

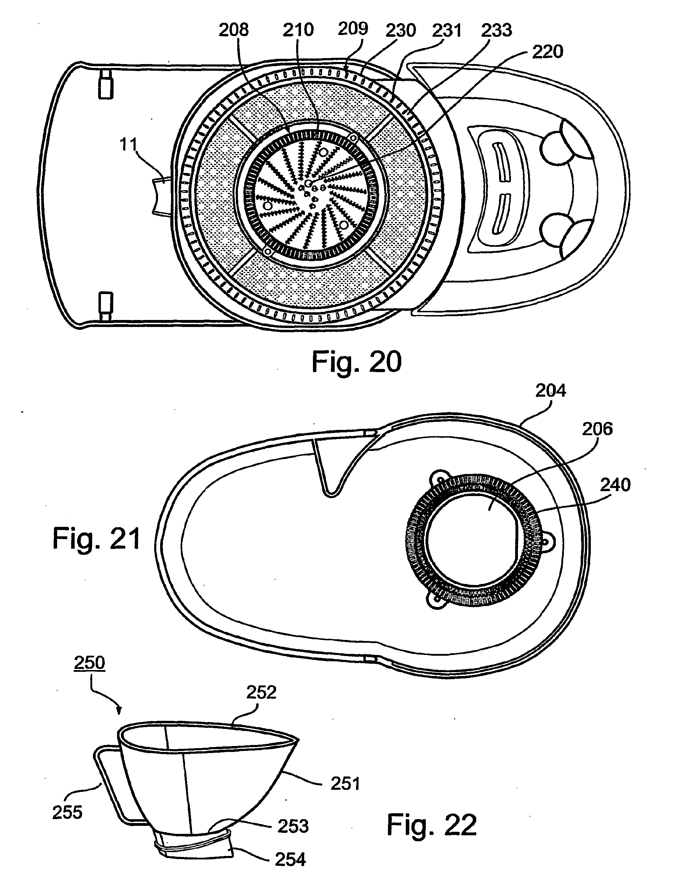

Another important difference in the appliance of Figs. 19-21 is that its upper cover 204 and its rotary cutter disc 208 include cooperable grinding projections for grinding the beans or other such food items introduced via the inlet feed tube 206. These grinding projections are best seen in Fig. 20 illustrating the upper end of the appliance housing when the upper cover 204 is removed, and in Fig. 21 illustrating the under surface of the upper cover 204.

Fig. 20, being a top view with the upper cover 204 removed, illustrates the rotary cutter disc 208 and the separator basket 209, both serving the same functions as described above with respect to Figs. 1-18. Thus, rotary cutter disc 208 cuts the food articles received through the feed tube 206 into a pulp saturated with the juice to be extracted, and separator basket 209 separates the juice from the pulp. The juice is directed to the outlet spout 11 (Fig. 19), and the pulp is directed to the pulp-receiving receptacle 15.

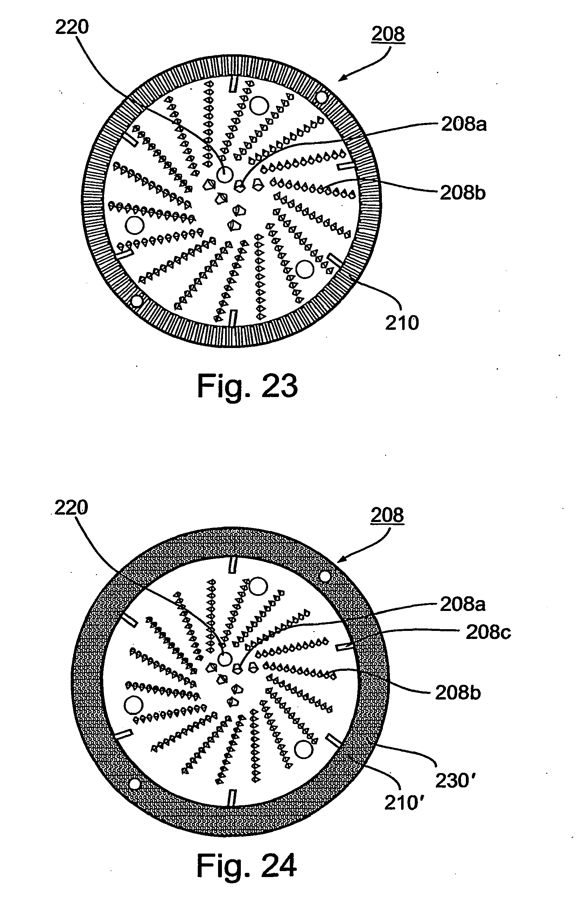

Rotary cutter disc 208 may be of the same construction as described above with respect to Figs. 1-18, as particularly illustrated in Figs. 9-12, to effectively cut-up the food articles completely without leaving the thin sliver adherent to the cutter disc, as described above with respect to Figs. 1-18. In the appliance illustrated in Figs. 19-21, however, cutter disc 208 also includes an annular array of grinding projections 210 around its outer periphery. The annular array of grinding projections 210 is rotated with the cutter disc and cooperates with a corresponding annular array of projections fixedly carried by the upper cover 204 to grind the food articles, e.g. coffee beans, soy beans, etc., introduced via the feed tube 206. Two preferred constructions of rotary cutter disc 208 are described below with respect to Figs. 23 and 24.

Another modification is in the separator basket 209 illustrated in Fig. 20, wherein its outer rim 230 is integrally formed with a plurality of radially-extending, circumferentially-spaced ribs 231. Ribs 231 also cooperate with the upper cover 204 to define passageways 232 which permit the passage of pulp from the separator basket 209 into the pulp receiving receptacle 15, but block the passage of seeds, pits, or the like in the food articles, e.g. grape seeds in grapes being juiced.

The under surface of the upper cover 204 is illustrated in Fig. 21. As shown, its feed tube 206 extends inwardly of its under surface and carries, at its inner end, an annular array of grinding projections 240 aligned with grinding projections 210 of the rotary cutter disc 208 when the upper cover 204 is secured to the housing by locking bar 5. Thus, the annular array of the fixed grinding projections 240 carried by cover 204 cooperate with the annular array of rotating grinding projections 210 on rotary cutter disc 208 to grind the coffee beans, soy beans, and the like, introduced into the appliance via the feed tube 206. The ground product is received within separator basket 209 and is rotated thereby at the high speed of rotation of the rotary cutter disc 208, so as to be thrust outwardly by centrifugal force, through the spaces 232 between the ribs 231 in the outer rim of the separator basket, and into the receptacle 15.

Thus, when the appliance of Figs. 19-21 is to be used for extracting juice from grapes or other fruit containing seeds, the pulp produced within separator basket 209 will be moved by centrifugal forces through the spaces 232 between the ribs 231 on the outer rim of the separator basket into the receptacle 15, whereas the seeds will be blocked by the ribs 231 so as to be retained within the separator basket. The pulp received within the receptacle 15 will not therefore be degraded by the seeds, and accordingly can be better used in other food preparations.

The manner of using the appliance illustrated in Figs. 19-21 will be apparent from the above description. Thus, the appliance may be used for extracting juice from food articles in the same manner as described above with respect to Figs. 1-18. In addition, the appliance of Figs. 19-21 may also be used for grinding beans, such as coffee beans, soy beans, etc., by introducing the beans into the feed tube 206, whereupon the beans are ground between the rotary grinding projections 210 of the rotary cutter disc 208, and the fixed grinding projections 240 of the upper cover 204. The ground product is moved by centrifugal forces through the passageways 232 between ribs 231 on the outer rim 230 of the separator basket 209 into the receptacle 15.

Fig. 22 illustrates a hand funnel, generally designated 250, which may be used to facilitate the use of the appliance of Figs. 19-21 for grinding beans. Funnel 250 illustrated in Fig. 22 includes a funnel section 251 decreasing in diameter from its open upper end 252 to its lower open end 253, and an outlet section 254 of cylindrical configuration integrally formed with the lower end 253 of the funnel section 251 so as to direct the beans or other such food articles into the open end of the feed tube 206. Funnel section 251 includes a handle 255 to facilitate manipulating the funnel.

Fig. 23 more particularly illustrates one preferred construction of rotary cutter disc 208. As shown in Fig. 23, the rotary cutter disc includes the first group of cutting edges 208a in the central region, and the second group of cutting edges 208b in the outer peripheral region, as described above particularly with respect to Figs. 11 and 12. In this case, however, rotary cutter disc 208 includes only a single rounded protuberance 220 eccentrically located with respect to the center of the cutter disc, for performing the "pinching" function described above with respect to Figs. 11 and 12, which facilitates the complete cutting of the food article without leaving a sliver to be removed.

Rotary cutter disc 208 illustrated in Fig. 23 also includes the annular array of grinding projections 210 cooperable with the fixed grinding projections 240 of the cover 204, for grinding beans and the like, as described above with respect to Figs. 20 and 21. As shown in Fig. 23, grinding projections 210 are in the form of radially-extending, circumferentially-spaced, ridges or ribs located around and outwardly of the cutting edges 208b.

Fig. 24 illustrates a modification in the construction of the rotary cutter disc 208, wherein the grinding projections are in the form of an annular array of dot-shaped protuberances, as shown at 210'. It will appreciated that when this type of rotary cutter disc is used, the fixed grinding projections carried by the upper cover, as illustrated at 240 in Fig. 20, may be of a similar construction.

Cutter disc 208 illustrated in both Figs. 23 and 24 include a third group of cutting edges, shown at 208c. This third group of cutting edges 208c are of linear form, extending radially of the cutter disc, and are spaced circumferentially around and outwardly of the second group of cutting edges 208b. In the cutter discs illustrated in Figs. 23 and 24, there are six of such radially-extending cutting edges 208c, but it will be appreciated that a smaller number or larger number of such cutting edges could be provided. It has been found that the provision of these additional cutting edges 208c more effectively cuts certain food articles, such as grapes, into juice-saturated pulp. It will be appreciated that the earlier described rotary cutter discs, such as illustrated in Figs. 9-12, could be provided with similar cutting edges.

While the invention has been described with respect to several preferred embodiments, it will be appreciated that these are set forth merely for purposes of example, and that many other variations, modifications and applications of the invention may be made whithin the scope of the invention as defind in the claims.

## Claims

1. . A food processing appliance for processing food articles, comprising:
a housing (2, 3, 4) having an inlet feed tube (6) for feeding food articles into the appliance;
a pusher rod (7) for manually pushing the food articles through said inlet feed tube (6); and
a rotary cutter disc (8, 108, 208) rotatable about a central disc axis and including a plurality of cutting edges (8a, 8b, 208a, 208b) for cutting the food articles into pieces when the food article is pushed against said cutter disc by said pusher rod (7);
**characterised in that** said cutter disc (8, 108, 208) includes, on the side thereof facing said inlet feed tube (6), a projecting pinching surface (20, 120, 220) projecting outwardly of said cutter disc (8, 108, 208) and located eccentrically with respect to said central disc axis such that when only a thin sliver of food article remains between said pusher rod (7) and cutter disc (8, 108, 208), said projecting pinching surface (20, 120, 220) presses the thin sliver against said pusher rod (7) sufficiently to effect a slight rotation of said thin sliver with respect to said cutter disc (8, 108, 208), and thereby to better assure the complete cutting up of the food article fed into said inlet feed tube (6).

2. . The appliance according to Claim 1, wherein said projecting pinching surface (20, 120, 220) is in the form of a dimple formed in the side of the cutter disc (8, 108, 208) opposite to that facing said inlet feed tube (6) at said eccentric location such as to produce said projecting pinching surface (20, 120, 220) on the side of the cutter disc (8, 108, 208) facing said inlet feed tube (6) or wherein said projecting pinching surface (20, 120, 220) is in the form of a rounded projection formed in the side of said cutter disc (8, 108,208) facing said inlet feed tube (6) at said eccentric location.

3. . The appliance according to Claim 1, wherein said rotary cutter disc (8, 108, 208) includes a plurality of said projecting pinching surface (20, 120, 220)s located eccentrically with respect to said central disc axis or wherein said rotary cutter disc (8, 108, 208) includes a single projecting pinching surface (20, 120, 220) located eccentrically with respect to said central disc axis.

4. . The appliance according to Claim 1 , wherein said plurality of cutting edges (8a, 8b, 208a, 208b) include a first group of cutting edges (8a, 208a) located in a central circular region (18, 118) of the rotary cutter disc (8, 108, 208), and a second group of cutting edges (8b, 208b) located in an outer peripheral region (19, 119) of the rotary cutter disc (8, 108, 208) around said central circular region (18, 118);
said projecting pinching surface (20, 120, 220) being located in said central circular region (18, 118) eccentrically with respect to said central disc axis.

5. . The appliance according to Claim 4, wherein said plurality of cutting edges include a third group of cutting edges (208c) of linear form extending radially of the cutter disc (8, 108, 208) and spaced circumferentially around and outwardly of said second group of cutting edges (208b).

6. . The appliance according to Claim 1, wherein the appliance is for extracting juice from said food articles; and
wherein the appliance further comprises: an outlet for outletting juice extracted from said food articles; and
a separator (9, 209) within said housing (2, 3, 4) for separating the juice from the pulp and for directing the juice via an outlet tube (10) to said outlet.

7. . The appliance according to Claim 6, wherein said outlet includes a spout (11) movably mounted with respect to said outlet tube (10) to a non-blocking position permitting the flow of juice to said spout (11), or to a blocking position blocking the flow of juice to said spout (11).

8. . The appliance according to Claim 7, wherein said spout (11) is pivotably mounted about a horizontal axis and includes a blocking element at one end engageable with said outlet tube (10) in the blocking position of the spout (11), and disengageable from said outlet tube (10) in the non-blocking position of the spout (11).

9. . The appliance according to Claim 6, wherein said appliance further comprises a lateral extension (12, 14) extending laterally of said housing (2, 3, 4) for receiving a receptacle (15) to collect the pulp after the juice has been separated therefrom.

10. . The appliance according to Claim 9 wherein said lateral extension (12, 14) includes a sensor for sensing a receptacle (15) thereon and effective to enable rotation of the rotary cutter disc (8, 108, 208) only when a receptacle (15) is sensed on said lateral extension (12,14).

11. . The appliance according to Claim 9, wherein the appliance includes a cover covering the upper end of said housing (2, 3, 4) and said receptacle (15) when received on said lateral extension (12, 14);
said cover being formed on its under surface with a plurality of circumferentially-spaced baffles defining passageways permitting the passage of pulp from said housing (2, 3, 4) into said receptacle (15), but blocking the entry of a person's fingers or other foreign objects into the housing (2, 3, 4) when the receptacle (15) is removed.

12. . The appliance according to Claim 9, wherein said separator (9, 209) includes a plurality of radially-extending circumferentially spaced vanes defining passageways permitting the passage of pulp from said housing (2, 3, 4) into said receptacle (15), but blocking the passage of seeds, pits, and the like in the food articles into said receptacle (15).

13. . The appliance according to Claim 1, wherein said rotatable cutter disc (8, 108, 208) includes an annular array of grinding projections (210); and
wherein said feed tube is integrally formed in a cover attachable over the upper end of said housing (2, 3, 4); said cover carrying on its under surface an annular array of grinding projections (210) cooperable with said grinding projections of said rotatable cutter disc (8, 108, 208), when the cover is attached to said housing (2, 3, 4), for grinding coffee beans, soy beans and the like.

14. . The juice extractor appliance according to Claim 8, wherein said blocking element is an elastomeric plug (145') receivable within the end of said outlet tube.

15. . The juice extractor appliance according to Claim 10, wherein said sensor is a microswitch (131) on said lateral extension and controlling a drive for said cutter disc.

16. . The appliance according to claim 11 wherein said separator (9, 209) includes an outer rim (230) engageable with said cover and formed with a plurality of radially-extending circumferentially spaced ribs. (231) defining, with said cover, passageways permitting the passage of pulp from said housing into said receptacle, but blocking the passage of seeds, pits, and the like in the food articles into said receptacle.

17. . The appliance according to Claim 1, wherein said rotary cutter disc (8, 108, 208) further includes an annular array of grinding projections (210) around and outwardly of said cutting edges for grinding coffee beans, soy beans, and the like.

18. . The appliance according to Claim 17, wherein said grinding projections are in the form of radially-extending circumferentialiy-spaced ridges (230') or wherein said grinding projections are in the form of an annular array of dot-shaped protuberances (210').

## Patentansprüche

1. Eine Lebensmittel-Verarbeitungsvorrichtung zum Verarbeiten von Lebensmitteln, die Folgendes umfasst:
ein Gehäuse (2, 3, 4) mit einem Eintragöffnungsrohr (6), um der Vorrichtung Lebensmittel zuzuführen;
eine Schubstange (7), um die Lebensmittel manuell durch das Eintragöffnungsrohr (6) zu schieben, und
eine drehende Schneidscheibe (8, 108, 208), die um eine Achse einer zentralen Scheibe drehbar ist und eine Vielzahl von Schneidkanten (8a, 8b, 208a, 208b) einschließt, um die Lebensmittel- in Stücke zu schneiden, wenn das Lebensmittel von der Schubstange (7) gegen die Schneidscheibe gedrückt wird,
**dadurch gekennzeichnet, dass** die Schneidscheibe (8, 108, 208) an der Seite davon, die zu dem Eintragöffnungsrohr (6) hin liegt, eine vorspringende Quetsch-Oberfläche (20, 120, 220) einschließt, die nach außen hin aus der Schneidscheibe (8, 108, 208) herausragt und exzentrisch zur Achse der zentralen Scheibe angeordnet ist, so dass, wenn nur ein dünnes Scheibchen Lebensmittel zwischen der Schubstange (7) und der Schneidscheibe (8, 108, 208) verbleibt, die vorspringende Quetsch-Oberfläche (20, 120, 220) das dünne Scheibchen ausreichend gegen die Schubstange (7) drückt, um eine leichte Drehung des dünnen Scheibchens im Verhältnis zu der Schneidscheibe (8, 108, 208) zu bewirken und um so die vollständige Zerkleinerung des Lebensmittels, das in das Eintragöffnungsrohr (6) eingeführt wird, sicherzustellen.

2. Die Vorrichtung gemäß Anspruch 1, wobei die vorspringende Quetsch-Oberfläche (20, 120, 220) in Form einer Sicke vorliegt, die in der Seite der Schneidscheibe (8, 108, 208) geformt ist, die gegenüber derjenigen liegt, die zu dem Eintragöffnungsrohr (6) an der exzentrischen Position hin gerichtet ist, um die vorspringende Quetsch-Oberfläche (20, 120, 220) an der Seite der Schneidscheibe (8, 108, 208) zu erzeugen, die zu dem Eintragöffnungsrohr (6) hin gerichtet ist, oder wobei die vorspringende Quetsch-Oberfläche (20, 120, 220) in Form eines gerundeten Vorsprungs vorliegt, der in der Seite der Schneidscheibe (8, 108, 208) geformt ist, welche in der exzentrischen Position zu dem Eintragöffnungsrohr (6) hin gerichtet ist.

3. Die Vorrichtung gemäß Anspruch 1, wobei die drehende Schneidscheibe (8, 108, 208) eine Vielzahl der vorspringenden Quetsch-Oberflächen (20, 120, 220) einschließt, die exzentrisch zur Achse der zentralen Scheibe angeordnet sind, oder wobei die drehende Schneidscheibe (8, 108, 208) eine einzige vorspringende Quetsch-Oberfläche (20, 120, 220) einschließt, die exzentrisch zur Achse der zentralen Scheibe angeordnet ist.

4. Die Vorrichtung gemäß Anspruch 1, wobei die Vielzahl von Schneidkanten (8a, 8b, 208a, 208b) eine erste Gruppe von Schneidkanten (8a, 208a) einschließt, die sich in einem zentralen kreisförmigen Bereich (18, 118) der drehenden Schneidscheibe (8, 108, 208) befindet, und eine zweite Gruppe von Schneidkanten (8b, 208b) einschließt, die sich in einem äußeren peripheren Bereich (19, 119) der drehenden Schneidscheibe (8, 108, 208), um den zentralen kreisförmigen Bereich (18, 118) herum, befinden;
wobei sich die vorspringende Quetsch-Oberfläche (20, 120, 220) in dem zentralen kreisförmigen Bereich (18, 118) exzentrisch zur Achse der zentralen Scheibe befindet.

5. Die Vorrichtung gemäß Anspruch 4, wobei die Vielzahl von Schneidkanten eine dritte Gruppe von Schneidkanten (208c) von linearer Form einschließt, die sich radial von der Schneidscheibe (8, 108, 208) erstrecken und in Umfangsrichtung um und auswärts von der zweiten Gruppe von Schneidkanten (208b) beabstandet sind.

6. Die Vorrichtung gemäß Anspruch 1, wobei die Vorrichtung der Extraktion von Saft aus den Lebensmitteln dient, und
wobei die Vorrichtung weiter Folgendes umfasst: einen Auslass zum Ablassen von Saft, der aus den Lebensmitteln extrahiert wurde, und
einen Abscheider (9, 209) innerhalb des Gehäuses (2, 3, 4), um den Saft von dem Fruchtfleisch zu trennen und um den Saft über ein Ablassrohr (10) zu dem Auslass zu leiten.

7. Die Vorrichtung gemäß Anspruch 6, wobei der Auslass eine Gießrinne (11) einschließt, beweglich angebracht im Verhältnis zu dem Ablassrohr (10) in eine nicht blockierende Position, welche das Fließen von Saft zu der Gießrinne (11) gestattet, oder in eine blockierende Position, die das Fließen von Saft zu der Gießrinne (11) verhindert.

8. Die Vorrichtung gemäß Anspruch 7, wobei die Gießrinne (11) drehgelenkig um eine horizontale Achse montiert ist und ein Blockierelement an einem Ende einschließt, das in der Blockierposition der Gießrinne (11) in das Ablassrohr (10) eingreifen kann und in der nicht blockierenden Position der Gießrinne (11) von dem Ablassrohr gelöst werden kann.

9. Die Vorrichtung gemäß Anspruch 6, wobei die Vorrichtung weiter eine seitliche Erweiterung (12, 14) umfasst, die sich seitlich von dem Gehäuse (2, 3, 4) erstreckt, zur Aufnahme eines Behälters (15), um das Fruchtfleisch aufzufangen, nachdem der Saft davon getrennt wurde.

10. Die Vorrichtung gemäß Anspruch 9, wobei die seitliche Erweiterung (12, 14) einen Sensor zur Erkennung eines Behälters (15) darauf einschließt, der wirksam ist, um die Drehung der drehenden Schneidscheibe (8, 108, 208) nur dann zu ermöglichen, wenn ein Behälter (15) auf der seitlichen Erweiterung (12, 14) erkannt wird.

11. Die Vorrichtung gemäß Anspruch 9, wobei die Vorrichtung einen Deckel einschließt, der das obere Ende des Gehäuses (2, 3, 4) und den Behälter (15) bei Aufnahme auf der seitlichen Erweiterung (12, 14) bedeckt;
wobei der Deckel an seiner unteren Oberfläche mit einer Vielzahl in Umfangsrichtung beabstandeter Trennwände geformt ist, die Durchgänge bestimmen, welche den Übergang von Fruchtfleisch von dem Gehäuse (2, 3, 4) in den Behälter (15) ermöglichen, aber das Eindringen der Finger einer Person oder anderer Fremdkörper in das Gehäuse (2, 3, 4), wenn der Behälter (15) entfernt ist, verhindern.

12. Die Vorrichtung gemäß Anspruch 9, wobei der Abscheider (9, 209) eine Vielzahl sich radial erstreckender in Umfangsrichtung beabstandeter Schaufeln einschließt, die Durchgänge bestimmen, welche den Übergang von Fruchtfleisch von dem Gehäuse (2, 3, 4) in den Behälter (15) ermöglichen, aber das Eindringen von Samen, Steinen und dergleichen in den Lebensmitteln in den Behälter (15) verhindern.

13. Die Vorrichtung gemäß Anspruch 1, wobei die drehbare Schneidscheibe (8, 108, 208) eine ringförmige Gruppe von Mahl-Vorsprüngen (210) einschließt, und
wobei das Eintragöffnungsrohr integral in einem Deckel gebildet ist, der über dem oberen Ende des Gehäuses (2, 3, 4) angebracht werden kann, wobei der Deckel an seiner unteren Oberfläche eine ringförmige Gruppe von Mahl-Vorsprüngen (210) trägt, die mit den Mahl-Vorsprüngen der drehbaren Schneidscheibe (8, 108, 208) zusammenwirken können, wenn der Deckel an dem Gehäuse (2, 3, 4) angebracht ist, zum Mahlen von Kaffeebohnen, Sojabohnen und Ähnlichem.

14. Die Entsaftervorrichtung gemäß Anspruch 8, wobei das Blockierelement ein Elastomerstöpsel (145') ist, der im Ende des Ablassrohrs aufgenommen werden kann.

15. Die Entsaftervorrichtung gemäß Anspruch 10, wobei der Sensor ein Mikroschalter (131) an der seitlichen Erweiterung ist und einen Antrieb für die Schneidscheibe steuert.

16. Die Vorrichtung gemäß Anspruch 11, wobei der Abscheider (9, 209) einen äußeren Rand (230) einschließt, der in den Deckel eingreifen kann und mit einer Vielzahl sich radial erstreckender, in Umfangsrichtung beabstandeter Rippen (231) geformt ist, die mit dem Deckel Durchgänge bestimmen, welche den Übergang von Fruchtfleisch von dem Gehäuse in den Behälter ermöglichen, aber den Übergang von Samen, Steinen und dergleichen in den Lebensmitteln in den Behälter verhindern.

17. Die Vorrichtung gemäß Anspruch 1, wobei die drehende Schneidscheibe (8, 108, 208) weiter eine ringförmige Gruppe von Mahl-Vorsprüngen (210) um die Schneidkanten herum und auswärts davon zum Mahlen von Kaffeebohnen, Sojabohnen und Ähnlichem einschließt.

18. Die Vorrichtung gemäß Anspruch 17, wobei die Mahl-Vorsprünge in Form sich radial erstreckender in Umfangsrichtung beabstandeter Rillen (230') vorliegen oder wobei die Mahl-Vorsprünge in Form einer ringförmigen Gruppe von punktförmigen Höckern (210') vorliegen.

## Revendications

1. Appareil de traitement alimentaire pour traiter des produits alimentaires, comprenant :
un boîtier (2, 3, 4) ayant un tube d'alimentation d'entrée (6) pour alimenter les produits alimentaires dans l'appareil ;
une tige poussoir (7) pour pousser manuellement les produits alimentaires à travers ledit tube d'alimentation d'entrée (6) ; et
un disque de coupe rotatif (8, 108, 208) pouvant tourner autour d'un axe de disque central et comprenant une pluralité de bords de coupe (8a, 8b, 208a, 208b) pour couper les produits alimentaires en morceaux lorsque le produit alimentaire est poussé contre ledit disque de coupe par ladite tige poussoir (7) ;
**caractérisé en ce que** ledit disque de coupe (8, 108, 208) comprend, sur son côté faisant face audit tube d'alimentation d'entrée (6), une surface de pincement en saillie (20, 120, 220) faisant saillie vers l'extérieur dudit disque de coupe (8, 108, 208) et positionnée de manière excentrique par rapport audit axe de disque central de sorte que lorsqu'il ne reste qu'une seule fine tranche de produit alimentaire entre ladite tige poussoir (7) et ledit disque de coupe (8, 108, 208), ladite surface de pincement en saillie (20, 120, 220) comprime la fine tranche contre ladite tige poussoir (7) suffisamment pour faire effectuer une légère rotation à ladite fine tranche par rapport audit disque de coupe (8, 108, 208) et ainsi pour mieux garantir la coupe complète du produit alimentaire alimenté dans ledit tube d'alimentation d'entrée (6).

2. Appareil selon la revendication 1, dans lequel ladite surface de pincement en saillie (20, 120, 220) se présente sous la forme d'une ride formée dans le côté du disque de coupe (8, 108, 208) opposé à celui qui fait face audit tube d'alimentation d'entrée (6) à ladite position excentrique afin de produire ladite surface de pincement en saillie (20, 120, 220) sur le côté du disque de coupe (8, 108, 208) faisant face audit tube d'alimentation d'entrée (6) ou dans lequel ladite surface de pincement en saillie (20, 120, 220) se présente sous la forme d'une saillie arrondie formée dans le côté dudit disque de coupe (8, 108, 208) faisant face audit tube d'alimentation d'entrée (6) à ladite position excentrique.

3. Appareil selon la revendication 1, dans lequel ledit disque de coupe rotatif (8, 108, 208) comprend une pluralité desdites surfaces de pincement en saillie (20, 120, 220) positionnées de manière excentrique par rapport audit axe de disque central ou dans lequel ledit disque de coupe rotatif (8, 108, 208) comprend une seule surface de pincement en saillie (20, 120, 220) positionnée de manière excentrique par rapport audit axe de disque central.

4. Appareil selon la revendication 1, dans lequel ladite pluralité de bords de coupe (8a, 8b, 208a, 208b) comprend un premier groupe de bords de coupe (8a, 208a) situé dans une région circulaire centrale (18, 118) du disque de coupe rotatif (8, 108, 208) et un deuxième groupe de bords de coupe (8b, 208b) situé dans une région périphérique externe (19, 119) du disque de coupe rotatif (8, 108, 208) autour de ladite région circulaire centrale (18, 118) ;
ladite surface de pincement en saillie (20, 120, 220) étant située dans ladite région circulaire centrale (18, 118) de manière excentrique par rapport audit axe de disque central.

5. Appareil selon la revendication 4, dans lequel ladite pluralité de bords de coupe comprend un troisième groupe de bords de coupe (208c) de forme linéaire s'étendant radialement par rapport au disque de coupe (8, 108, 208) et espacé de manière circonférentielle autour et vers l'extérieur dudit deuxième groupe de bords de coupe (208b).

6. Appareil selon la revendication 1, dans lequel l'appareil est prévu pour extraire du jus desdits produits alimentaires ; et
dans lequel l'appareil comprend en outre une sortie pour faire sortir le jus extrait desdits produits alimentaires ; et
un séparateur (9, 209) à l'intérieur dudit boîtier (2, 3, 4) pour séparer le jus de la pulpe et pour diriger le jus via un tube de sortie (10) vers ladite sortie.

7. Appareil selon la revendication 6, dans lequel ladite sortie comprend un bec verseur (11) monté de manière mobile par rapport audit tube de sortie (10) dans une position sans blocage permettant l'écoulement du jus vers ledit bec verseur (11) ou dans une position de blocage bloquant l'écoulement du jus vers ledit bec verseur (11).

8. Appareil selon la revendication 7, dans lequel ledit bec verseur (11) est monté de manière pivotante sur un axe horizontal et comprend un élément de blocage au niveau d'une extrémité pouvant se mettre en prise avec ledit tube de sortie (10) dans la position de blocage du bec verseur (11) et pouvant se dégager dudit tube de sortie (10) dans la position sans blocage du bec verseur (11).

9. Appareil selon la revendication 6, dans lequel ledit appareil comprend en outre une extension latérale (12, 14) s'étendant latéralement par rapport audit boîtier (2, 3, 4) pour recevoir un réceptacle (15) afin de collecter la pulpe après que le jus a été séparé de celle-ci.

10. Appareil selon la revendication 9, dans lequel ladite extension latérale (12, 14) comprend un capteur pour détecter un réceptacle (15) sur celle-ci et efficace pour permettre la rotation du disque de coupe rotatif (8, 108, 208) uniquement lorsqu'un réceptacle (15) est détecté sur ladite extension latérale (12, 14).

11. Appareil selon la revendication 9, dans lequel l'appareil comprend un couvercle recouvrant l'extrémité supérieure dudit boîtier (2, 3, 4) et ledit réceptacle (15) lorsqu'il est reçu sur ladite extension latérale (12, 14) ;
ledit couvercle étant formé sur sa surface inférieure avec une pluralité de déflecteurs espacés de manière circonférentielle définissant des voies de passage permettant le passage de la pulpe dudit boîtier (2, 3, 4) dans ledit réceptacle (15), mais empêchant l'entrée des doigts d'une personne ou d'autres corps étrangers dans le boîtier (2, 3, 4) lorsque le réceptacle (15) est retiré.

12. Appareil selon la revendication 9, dans lequel ledit séparateur (9, 209) comprend une pluralité de pales s'étendant de manière radiale et espacées de manière circonférentielle définissant des voies de passage permettant le passage de la pulpe dudit boîtier (2, 3, 4) dans ledit réceptacle (15), mais empêchant le passage des graines, des noyaux et similaires présents dans les produits alimentaires, dans ledit réceptacle (15).

13. Appareil selon la revendication 1, dans lequel ledit disque de coupe rotatif (8, 108, 208) comprend un réseau annulaire de saillies de moulure (210) ; et
dans lequel ledit tube d'alimentation est formé de manière solidaire dans un couvercle pouvant être fixé sur l'extrémité supérieure dudit boîtier (2, 3, 4) ; ledit couvercle supportant sur sa surface inférieure un réseau annulaire de saillies de moulure (210) qui coopèrent avec lesdites saillies de moulure dudit disque de coupe rotatif (8, 108, 208), lorsque le couvercle est fixé sur ledit boîtier (2, 3, 4), pour moudre des grains de café, des fèves de soja et similaires.

14. Appareil d'extraction de jus selon la revendication 8, dans lequel ledit élément de blocage est un bouchon élastomère (145') pouvant être reçu à l'intérieur de l'extrémité dudit tube de sortie.

15. Appareil d'extraction de jus selon la revendication 10, dans lequel ledit capteur est un micro interrupteur (131) sur ladite extension latérale et commandant un entraînement pour ledit disque de coupe.

16. Appareil selon la revendication 11, dans lequel ledit séparateur (9, 209) comprend un bord externe (230) pouvant se mettre en prise avec ledit couvercle et formé avec une pluralité de nervures (231) s'étendant de manière radiale et espacées de manière circonférentielle définissant avec ledit couvercle, des voies de passage permettant le passage de la pulpe dudit boîtier dans ledit réceptacle, mais empêchant le passage des graines, des noyaux et similaires présents dans les produits alimentaires, dans ledit réceptacle.

17. Appareil selon la revendication 1, dans lequel ledit disque de coupe rotatif (8, 108, 208) comprend en outre un réseau annulaire de saillies de moulure (210) autour et vers l'extérieur desdits bords de coupe pour moudre les grains de café, les fèves de soja et similaires.

18. Appareil selon la revendication 17, dans lequel lesdites saillies de moulure se présentent sous la forme de parties saillantes (230') s'étendant de manière radiale et espacées de manière circonférentielle ou dans lequel lesdites saillies de moulure se présentent sous la forme d'un réseau annulaire de protubérances en forme de points (210').
